# EUROPEAN PATENT SPECIFICATION

(11) **EP 3 290 599 B1**
(45) Date of publication and mention of the grant of the patent: **27.02.2019**
(21) Application number: 16002758.7
(22) Date of filing: 23.12.2016
(51) Int. Cl.: E03C 1/04, F16K 11/20

(54) **SHOWER TAP WITH MODULARIZED TEMPERATURE CONTROL AND SWITCH CONTROL**
DUSCHHAHN MIT MODULARISIERTER TEMPERATURREGELUNG UND SCHALTERSTEUERUNG
ROBINET DE DOUCHE AVEC RÉGULATION MODULAIRE DE TEMPÉRATURE ET COMMANDE DE COMMUTATEUR

(30) Priority: 30.08.2016 CN 201610769388
(43) Date of publication of application: 07.03.2018
(73) Proprietor: Xiamen Solex High-Tech Industries Co., Ltd., Xiamen Area of China (Fujian) Pilot Free Trade Zone (CN)
(72) Inventor: LIU, Guirong, Fujian 361000 (CN); DAN, Tangjun, Fujian 361000 (CN); HU, Lihong, Fujian 361000 (CN)
(74) Representative: Verscht, Thomas Kurt Albert

(56) References cited:
- EP-A1- 3 015 610
- CN-U- 202 914 843
- JP-A- 2003 184 139
- US-A- 5 924 449

## Description

### Field of the invention

The present invention relates to shower tap, particularly to shower tap with modularized temperature control and switch control, according to the preamble of claim 1.

### Background of the invention

A shower tap mechanism with temperature control and switch control is disclosed in Chinese patent database with publishing number CN20465475U, the shower tap mechanism comprises a housing, a temperature control mechanism, a switch mechanism, a first outlet module and a second outlet module. The temperature control mechanism and the switch mechanism are directly fixed in the housing. The temperature control module comprises a cool water inlet, a hot water inlet and a mixing water outlet; the cool and hot water inlet can be connected to the water resource by flexible pipes. The mixing water outlet of the temperature control mechanism and the mixing water inlet of the switch mechanism are fixed and connected directly or by a hard pipe. The first water diversion hole, a second water diversion hole of the switch mechanism are respectively fixed and connected to the first outlet module and the second outlet module directly or by a hard pipe. It has disadvantages: firstly, the temperature control mechanism and the switch mechanism are directly fixed in the housing, the assembly is inconvenient, the structure is complicated; secondly, the mixing water outlet of the temperature mechanism and the mixing water inlet of the switch mechanism are fixed and connected directly or by hard pipe, the first water diversion hole, a second water diversion hole of the switch mechanism are respectively fixed and connected to the first outlet module and the second outlet module directly or by a hard pipe, the hard pipe connecting requires high manufacturing precision, which is inconvenient for modularization manufacturing.

Document EP3015610A describes a tap for a shower comprising a housing, a temperature control module, a switch module , first and second outlets and cool and hot water inlets. The parts of the tap are arranged in a specific constellation. Different arrangements are not foreseen.

### Summary of the invention

The present invention is provided with a shower tap with modularized temperature control and switch control, which overcomes the disadvantages of the traditional shower tap mechanism.

The technical proposal of the present invention is that:
A shower tap with modularized temperature control and switch control, comprising a housing, a temperature control module, a temperature control operation portion, a switch module, a switch operation portion, a first outlet module and a second outlet module, the temperature control module is disposed with a cool water inlet and a hot water inlet, wherein further comprising a fixing board, the temperature control module and the switch module are fixedly assembled to the fixing board; the fixing board is fixedly assembled in the housing, the cool water inlet and the hot water inlet of the temperature control module pass through and extend out of the housing; the first outlet module and the second outlet module are fixedly assembled in the fixing board or the housing and pass through and extend out of the housing; a mixing water outlet of the temperature control module is connected to a mixing water inlet of the switch module by a flexible pipe or retractable pipe; a first water diversion hole of the switch module is connected to the first outlet module by a flexible pipe or retractable pipe, a second water diversion hole of the switch module is connected to the second outlet module; the temperature control operation portion and the switch operation portion are respectively connected to the temperature control module and the switch module.

In another preferred embodiment, the first outlet module is fixedly assembled to the fixing board.

In another preferred embodiment, the temperature control module and the switch module are assembled in the housing; the first outlet module comprises a L shaped joint and a first outlet joint, one end of the L shaped joint passes through the fixing board from down to up, the first outlet joint is disposed on the fixing board, the first outlet joint is fixedly assembled and connected to the end of the L shaped joint, the L shaped joint, the first outlet joint are fixedly assembled to the fixing board.

In another preferred embodiment, the temperature control module and the switch module are disposed under the fixing board.

In another preferred embodiment, the housing comprises a bottom shell and a cover plate; the bottom shell is disposed with a bottom wall, the bottom wall is disposed with an extending edge comprising a front edge and a left and right edge respectively connected to the left and right end of the front edge, the extending edge extends upwardly to form a side wall; the cover plate is fixed to the side wall, an assembly chamber is formed between the cover plate and the bottom shell, the fixing board is fixed to the bottom shell, the cover plate is disposed on the fixing board; the temperature control module, the switch module and the fixing board are disposed in the assembly chamber.

In another preferred embodiment, the portions of the side wall corresponding to the left and right edge are respectively disposed with a hole passing through the side wall, the temperature control operation portion and the switch operation portion respectively pass through the two holes to connect to the temperature control module and the switch module. In another preferred embodiment, the bottom wall is disposed with a boss, the fixing board is contacted on the end face of the boss and is fixedly assembled by screws.

In another preferred embodiment, the cover plate is a glass board, the fixing board is a stainless steel board.

In another preferred embodiment, the cover plate is disposed with a through hole, the first outlet joint passes through the through hole; the second outlet module extends downwardly out of the bottom shell.

In another preferred embodiment, the mixing water outlet of the temperature control module and the mixing water inlet of the switch module are connected by a flexible pipe, the first water diversion hole of the switch module is connected to the first outlet module by a flexible pipe; the mixing water outlet of the temperature control module, the mixing water inlet of the switch module, the first water diversion hole of the switch module and the first outlet module are respectively disposed with a connecting joint, the connecting joint and the flexible pipe are connected by that: the external revolution surface of the connecting joint is concaved with an annular groove, the end of the flexible pipe is sleeved on the connecting joint, a clamp spring is configured, the clamp spring is locked on the flexible pipe at the position corresponding to the annular groove.

Compared to the traditional technology, the technical solution of the present invention has following advantages:
On one hand, the present invention further comprises a fixing board, the temperature control module and the switch module can be firstly fixedly assembled to the fixing board, then the fixing board is assembled in the housing, on the other hand, the mixing water outlet of the temperature control module is connected to the mixing water inlet of the switch module by a flexible pipe or a retractable pipe, the first water diversion hole of the switch module is connected to the first outlet module by a flexible pipe or a retractable pipe, the difference of the space or position of the temperature control module, the switch module and the first outlet module would not influence the connecting of the waterways, therefore, the assembly adaption of the modules and the housing is well, the requirement of different user or different housing size can be satisfied; it is convenient to realize modularization manufacturing of shower taps, the cost is greatly reduced, the efficiency is improved.

The first outlet joint and the end of the L shaped joint are fixedly assembled together and connected, such that the first outlet joint and the L shaped joint clamp the fixing board, making the three fixedly assembled together, the structure is compact and simple.

The temperature control module, the switch module and the fixing board are disposed in the assembly chamber, the structure is compact and simple.The bottom wall is disposed with a boss, the fixing board is contacted on the end face of the boss and is fixedly connected by a screw, the connecting is fixing and reliable.

The cover plate is a glass board, the fixing board is a stainless steel board, such that the assembly is convenient, the structure is solid and reliable.

### Brief description of the drawings

The present invention will be further described with the drawings and embodiments.
FIG.1 illustrates a schematic diagram of a shower tap.
FIG.2 illustrates a front view of the shower tap.
FIG.3 illustrates an exploded and schematic diagram of the shower tap.
FIG.4 illustrates a sectional diagram of the shower tap.
FIG.5 illustrates a top view of the shower tap with the cover plate removed.
FIG.6 illustrates a sectional diagram of a switch module and a second outlet module of a shower tap of a second embodiment.
FIG.7 illustrates a schematic diagram of a retractable pipe of a shower tap of a third embodiment.

### Detailed description of the embodiments

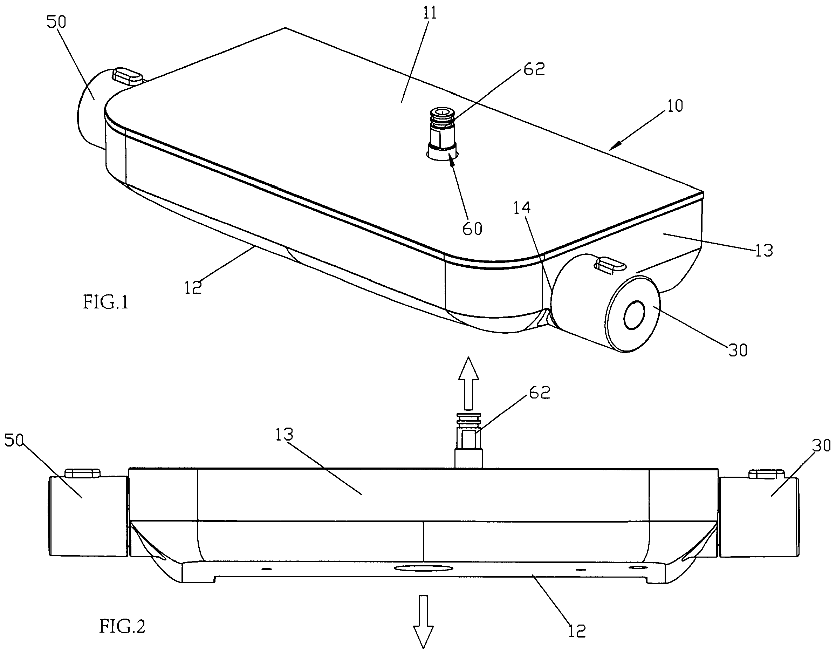

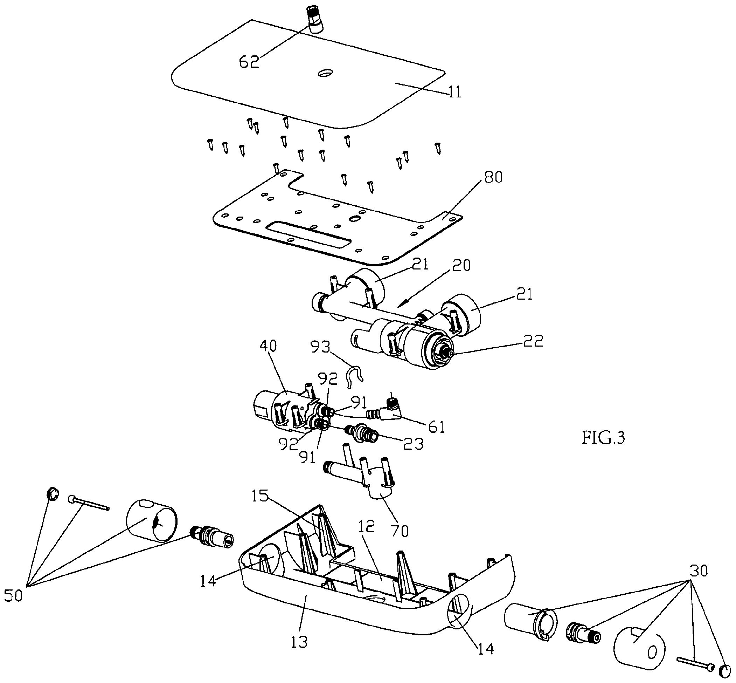

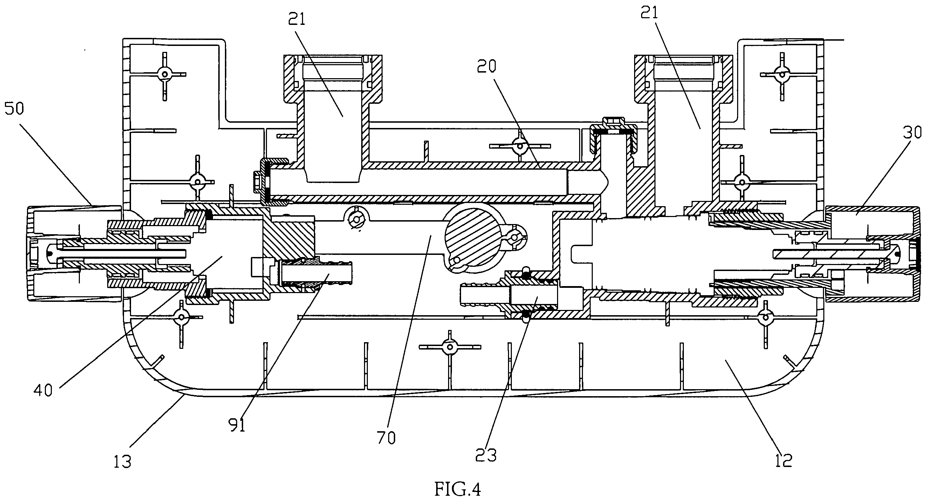

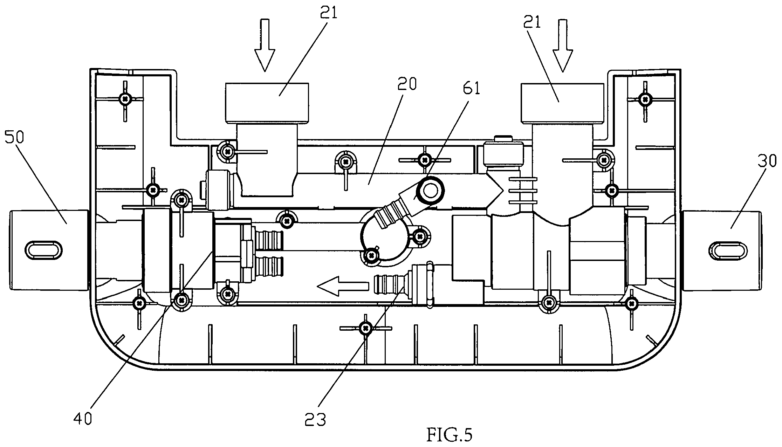

Referring to FIGS 1-5, the shower tap with modularized temperature control and switch control comprises a housing 10, a temperature control module 20, a temperature control operation portion 30, a switch module 40, a switch operation portion 50, a first outlet module 60, a second outlet module 70 and a fixing board 80. The fixing board 80 is a stainless steel board. The temperature control module 20 is disposed with a cool water inlet 21, a hot water inlet 21 and a mixing water outlet 23, the switch module 40 is disposed with a mixing water inlet, a first water diversion hole and a second water diversion hole.

The temperature control module 20 and the switch module 40 are fixedly assembled to the fixing board 80; the fixing board 80 is fixedly assembled in the housing 10, the temperature control module 20 and the switch module 40 are assembled in the housing 10; the temperature control module 20 and the switch module 40 are disposed under the fixing board 80; the cool water inlet and the hot water inlet of the temperature control module 20 pass through and extend out of the housing 10; the first outlet module 60 is fixedly assembled to the fixing board 80; the second outlet module 70 is fixedly assembled to the housing 10; the first outlet module 60 and the second outlet module 70 pass through and extend out of the housing 10.

The mixing water outlet of the temperature control module is connected to the mixing water inlet of the switch module 40 by a first flexible pipe (not figured out), the first water diversion hole of the switch module 40 is connected to the first outlet module 60 by a second flexible pipe (not figured out), the second water diversion hole of the switch module 40 is directly connected and fixed to the second outlet module 70; the temperature control operation portion 30 and the switch operation portion 50 are respectively connected to the temperature control module 20 and the switch module 40, such that the user can control the temperature control module 20 and the switch module 40 respectively by the temperature control operation portion 30 and the switch operation portion 50 such to adjust the temperature and switch the waterways. The temperature control module 20 is disposed with a first operation element 22, the switch module 40 is disposed with a second operation element, the temperature control operation portion 30 and the switch operation portion 50 are respectively fixed to the first and second operation element to drive the operation elements to move to adjust the temperature and switch the waterways.

In detailed, the first outlet module 60 comprises a L shaped joint 61 and a first outlet joint 62, one end of the L shaped joint 61 passes through the fixing board 80 form down to up, the first outlet joint 62 is fixed to the fixing board 80, the first outlet joint 62 and the end of the L shaped joint 61 are fixedly assembled together and connected, such that the first outlet joint 62 and the L shaped joint 61 clamp the fixing board, making the three fixedly assembled together.

In detail, the housing 10 comprises a bottom shell and a cover plate, the cover plate is a glass board, the cover plate or the housing can be served as a platform; the bottom shell is disposed with a bottom wall 12, the bottom wall is disposed with an extending edge comprising a front edge and a left and right edge respectively connected to the left and right end of the front edge, the extending edge extends upwardly to form a side wall 13; the cover plate 11 is fixed to the side wall 13, an assembly chamber is formed between the cover plate 11 and the bottom shell, the fixing board 80 is fixed to the bottom shell, the cover plate 11 is disposed on the fixing board; the temperature control module, the switch module and the fixing board are disposed in the assembly chamber. The portions of the side wall 13 corresponding to the left and right edge are respectively disposed with a hole 14 passing through the side wall, the temperature control operation portion 30 and the switch operation portion 50 respectively pass through the two holes 14 to connect to the temperature control module 20 and the switch module 40. The first operation element of the temperature control module 20 and the second operation element of the switch module 40 are symmetrically and oppositely arranged.

In this embodiment, the bottom wall 12 is disposed with a boss 15, the fixing board 80 is contacted on the end face of the boss and is fixedly assembled by screws. The cover plate 11 is disposed with a through hole, the first outlet joint 62 passes through the through hole; the second outlet module 70 is L shaped, one end of the L shaped passes through the bottom wall 12 of the bottom shell and extends out.

The mixing water outlet of the temperature control module is connected to the mixing water inlet of the switch module by a flexible pipe, the first water diversion hole of the switch module is connected to the first outlet module by a flexible pipe; the mixing water outlet of the temperature control module, the mixing water inlet of the switch module, the first water diversion hole of the switch module and the first outlet module are respectively disposed with a connecting joint 91, the connecting joint 91 and the flexible pipe are connected by that: the external revolution surface of the connecting joint 91 is concaved with an annular groove 92, the end of the flexible pipe is sleeved on the connecting joint 91, a clamp spring 93 is configured, the clamp spring 93 is locked on the flexible pipe at the position corresponding to the annular groove 92. The clamp spring 93 comprises a central portion and two suspending sections extending from two ends of the central portion, the space between the suspending portions is big then small then big from the opening to the inside, the small portion is used to realize elastic lock, such to improve the connecting strength of the flexible pipe and the connecting joint, thus ensuring the sealing performance.

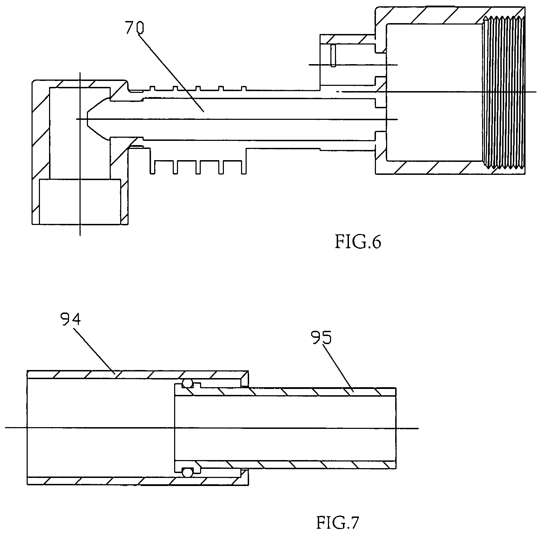

Another preferred embodiment is provided and it differs from the first embodiment in that: referring to FIG.6, the second outlet module is threaded and connected to the joint of the second water diversion hole of the switch module.

A third preferred embodiment is provided and it differs from the first embodiment in that: the flexible pipe is replaced by a retractable pipe, the retractable pipe comprises an external pipe 94 and an internal pipe 95 slidably connected in sleeve way.

The invention may be summarized as follows: The present invention is provided with a shower tap with modularized temperature control and switch control, comprising a housing, a temperature control module, a temperature control operation portion, a switch module, a switch operation portion, a first outlet module and a second outlet module, the temperature control module is disposed with a cool water inlet and a hot water inlet, wherein further comprising a fixing board, the temperature control module and the switch module are fixedly assembled to the fixing board; the fixing board is fixedly assembled in the housing, the cool water inlet and the hot water inlet of the temperature control module pass through and extend out of the housing; the first outlet module and the second outlet module are fixedly assembled in the fixing board or the housing and pass through and extend out of the housing; a mixing water outlet of the temperature control module is connected to a mixing water inlet of the switch module by a flexible pipe or retractable pipe; a first water diversion hole of the switch module is connected to the first outlet module by a flexible pipe or retractable pipe, a second water diversion hole of the switch module is connected to the second outlet module; the temperature control operation portion and the switch operation portion are respectively connected to the temperature control module and the switch module. The present invention has advantages: it is convenient to realize modularization manufacturing of shower taps, the cost is largely reduced, the efficiency is improved. Although the present invention has been described with reference to the preferred embodiments thereof for carrying out the patent for invention, it is apparent to those skilled in the art that a variety of modifications and changes may be made without departing from the scope of the patent for invention which is defined by the appended claims.

## Claims

1. A shower tap with modularized temperature control and switch control, comprising a housing (10), a temperature control module (20), a temperature control operation portion (30), a switch module (40), a switch operation portion (50), a first outlet module (60) and a second outlet module (70), the temperature control module (20) is disposed with a cool water inlet (21) and a hot water inlet (21), the cool water inlet (21) and the hot water inlet (21) of the temperature control module (20) pass through and extend out of the housing (10); wherein a first water diversion hole of switch module (40) is connected to the first outlet module (60) by a flexible pipe or retractable pipe, a second water diversion hole of the switch module (40) is connected to the second outlet module (70); the temperature control operation portion (30) and the switch operation portion (50) are respectively connected to the temperature control module (20) and the switch module (40); **characterized in that** the tap further comprises a fixing board, the temperature control module (20) and the switch module (40) being fixedly assembled to the fixing board (80); the fixing board (80) being fixedly assembled in the housing; whereby the first outlet module (60) and the second outlet module (70) are fixedly assembled on the fixing board (80) or in the housing (10) and pass through and extend out of the housing; and wherein a mixing water outlet (23) of the temperature control module (20) is connected to a mixing water inlet of the switch module (40) by a flexible pipe or retractable pipe.

2. The shower tap with modularized temperature control and switch control according to claim 1, wherein the first outlet module (60) is fixedly assembled to the fixing board (80).

3. The shower tap with modularized temperature control and switch control according to claim 1 and/or 2, wherein the temperature control module (20) and the switch module (40) are assembled in the housing (10); the first outlet module (60) comprises an L shaped joint (61) and a first outlet joint (62), one end of the L shaped joint passes through the fixing board (80) from down to up, the first outlet joint is disposed on the fixing board, the first outlet joint is fixedly assembled and connected to the end of the L shaped joint, the L shaped joint, the first outlet joint are fixedly assembled to the fixing board.

4. The shower tap with modularized temperature control and switch control according to any one or more of claims 1 to 3, wherein the temperature control module (20) and the switch module (40) are disposed under the fixing board (80).

5. The shower tap with modularized temperature control and switch control according to any one or more of claims 1 to 4, wherein the housing (10) comprises a bottom shell and a cover plate (11); the bottom shell is disposed with a bottom wall, the bottom wall (12) is disposed with an extending edge comprising a front edge and a left and right edge respectively connected to the left and right end of the front edge, the extending edge extends upwardly to form a side wall; the cover plate is fixed to the side wall (13), an assembly chamber is formed between the cover plate and the bottom shell, the fixing board (80) is fixed to the bottom shell, the cover plate is disposed on the fixing board; the temperature control module, the switch module and the fixing board are disposed in the assembly chamber.

6. The shower tap with modularized temperature control and switch control according to claim 5, wherein the portions of the side wall (13) corresponding to the left and right edge are respectively disposed with a hole (14) passing through the side wall, the temperature control operation portion (30) and the switch operation portion (50) respectively pass through the two holes (14) to connect to the temperature control module (20) and the switch module (40).

7. The shower tap with modularized temperature control and switch control according to claim 5 and/or 6, wherein the bottom wall (12) is disposed with a boss (15), the fixing board (80) is contacted on the end face of the boss and is fixedly assembled by screws.

8. The shower tap with modularized temperature control and switch control according to any one or more of claims 5 to 7, wherein the cover plate (11) is a glass board, the fixing board (80) is a stainless steel board.

9. The shower tap with modularized temperature control and switch control according to any one or more of claims 5 to 8, wherein the cover plate (11) is disposed with a through hole, the first outlet joint (62) passes through the through hole; the second outlet module (70) extends downwardly out of the bottom shell.

10. The shower tap with modularized temperature control and switch control according to any one or more of claims 1 to 9, wherein the mixing water outlet (23) of the temperature control module (20) and the mixing water inlet of the switch module (40) are connected by a flexible pipe, the first water diversion hole of the switch module is connected to the first outlet module (60) by a flexible pipe; the mixing water outlet of the temperature control module, the mixing water inlet of the switch module, the first water diversion hole of the switch module and the first outlet module are respectively disposed with a connecting joint (91), the connecting joint and the flexible pipe are connected by that: the external revolution surface of the connecting joint is concaved with an annular groove (92), the end of the flexible pipe is sleeved on the connecting joint, a clamp spring (93) is configured, the clamp spring is locked on the flexible pipe at the position corresponding to the annular groove.

## Patentansprüche

1. Duschhahn mit modularisierter Temperatursteuerung und Schaltsteuerung, der aufweist: ein Gehäuse (10), ein Temperaturstenermodul (20), einen Temperatursteuerbedienabschnitt (30), ein Schaltmodul (40), einen Schaltbedienabschnitt (50), ein erstes Auslassmodul (60) und ein zweites Auslassmodul (70), wobei das Temperatursteuermodul (20) mit einem Kaltwassereinlass (21) und einem Heißwassereinlass (21) versehen ist, wobei der Kaltwassereinlass (21) und der Heißwassereinlass (21) des Temperatursteuermoduls (20) durch das Gehäuse (10) gehen und sich aus ihm heraus erstrecken; wobei ein erstes Wasserumleitungsloch des Schaltmoduls (40) durch eine flexible Leitung oder eine einziehbare Leitung mit dem ersten Auslassmodul (60) verbunden ist, wobei ein zweites Wasserumleitungsloch des Schaltmoduls (40) mit dem zweiten Auslassmodul (70) verbunden ist; wobei der Temperatursteuerbedienabschnitt (30) und der Schaltbedienabschnitt (50) jeweils mit dem Temperatursteuermodul (20) und dem Schaltmodul (40) verbunden sind;
**dadurch gekennzeichnet, dass**
der Hahn ferner aufweist:
eine Befestigungsplatte, wobei das Temperatursteuermodul (20) und das Schaltmodul (40) fest an der Befestigungsplatte (80) befestigt sind;
wobei die Befestigungsplatte (80) fest in dem Gehäuse montiert ist;
wobei das erste Auslassmodul (60) und das zweite Auslassmodul (70) fest auf der Befestigungsplatte (80) oder in dem Gehäuse (10) montiert sind und durch das Gehäuse gehen und sich aus ihm heraus erstrecken; und
wobei ein Mischauslass (23) des Temperatursteuermoduls (20) durch eine flexible Leitung oder eine einziehbare Leitung mit einem Mischwassereinlass des Schaltmoduls (40) verbunden ist.

2. Duschhahn mit modularisierter Temperatursteuerung und Schaltsteuerung nach Anspruch 1, wobei das erste Auslassmodul (60) fest an der Befestigungsplatte (80) montiert ist.

3. Duschhahn mit modularisierter Temperatursteuerung und Schaltsteuerung nach Anspruch 1 und/oder 2, wobei das Temperatursteuermodul (20) und das Schaltmodul (40) in dem Gehäuse (10) montiert sind;
wobei das erste Auslassmodul (60) ein L-förmiges Anschlussstück (61) und ein erstes Auslassanschlussstück (62) aufweist,
wobei ein Ende des L-förmigen Anschlussstücks von oben nach unten durch die Befestigungsplatte (80) geht,
wobei das erste Auslassanschlussstück auf der Befestigungsplatte angeordnet ist, das erste Auslassanschlussstück fest an dem Ende des L-formigen Anschlussstücks montiert und damit verbunden ist, wobei das L-förmige Anschlussstück, wobei das erste Auslassstück fest an der Befestigungsplatte montiert sind.

4. Duschhahn mit modularisierter Temperatursteuerung und Schaltsteuerung nach einem oder mehreren der Ansprüche 1 bis 3, wobei das Temperatursteuermodul (20) und das Schaltmodul (40) unter der Befestigungsplatte (80) angeordnet sind.

5. Duschhahn mit modularisierter Temperatursteuerung und Schaltsteuerung nach einem oder mehreren der Ansprüche 1 bis 4, wobei das Gehäuse (10) eine Unterschale und eine Abdeckplatte (11) aufweist;
wobei die Unterschalte mit einer Bodenwand versehen ist, wobei die Bodenwand (12) mit einer sich erstreckenden Kante versehen ist, die eine vordere Kante und eine linke und rechte Kante, die jeweils mit dem linken und rechten Ende der vorderen Kante verbunden sind, aufweist, wobei die sich erstreckende Kante sich aufwärts erstreckt, um eine Seitenwand zu bilden;
wobei die Abdeckplatte an der Seitenwand (13) befestigt ist, wobei eine Anordnungskammer zwischen der Abdeckplatte und der Unterschale ausgebildet ist, wobei die Befestigungsplatte (80) an der Unterschale befestigt ist, wobei die Abdeckplatte auf der Befestigungsplatte angeordnet ist;
wobei das Temperatursteuermodul, das Schaltmodul und die Befestigungsplatte in der Anordnungskammer angeordnet sind.

6. Duschhahn mit modularisierter Temperatursteuerung und Schaltsteuerung nach Anspruch 5, wobei die Abschnitte der Seitenwand (13), die der linken und rechten Kante entsprechen, jeweils mit einem Loch (14) versehen sind, das durch die Seitenwand geht, wobei der Temperatursteuerbedienabschnitt (30) und der Schaltbedienabschnitt (50) jeweils durch die zwei Löcher (14) gehen, um mit dem Temperatursteuermodul (20) und dem Schaltmodul (40) zu verbinden.

7. Duschhahn mit modularisierter Temperatursteuerung und Schaltsteuerung nach Anspruch 5 und/oder 6, wobei die Bodenwand (12) mit einem Ansatz (15) versehen ist, wobei die Befestigungsplatte (80) auf der Endfläche des Ansatzes kontaktiert wird und durch Schrauben fest montiert ist.

8. Duschhahn mit modularisierter Temperatursteuerung und Schaltsteuerung nach einem oder mehreren der Ansprüche 5 bis 7, wobei die Abdeckplatte 11) eine Glaspatte ist, wobei die Befestigungsplatte (80) eine nichtrostende Stahlplatte ist.

9. Duschhahn mit modularisierter Temperatursteuerung und Schaltsteuerung nach einem oder mehreren der Ansprüche 5 bis 8, wobei die Abdeckplatte (11) mit einem Durchgangsloch versehen ist,
wobei das erste Auslassverbindungsstück (62) durch das Durchgangsloch geht; wobei das zweite Auslassmodul (70) sich aus der Unterschale heraus nach unten erstreckt.

10. Duschhahn mit modularisierter Temperatursteuerung und Schaltsteuerung nach einem oder mehreren der Ansprüche 1 bis 9, wobei der Mischwasserauslass (23) des Temperatursteuermoduls (20) und der Mischwassereinlass des Schaltmoduls (40) durch eine flexible Leitung verbunden sind, wobei das erste Wasserableitungsloch des Schaltmoduls durch eine flexible Leitung mit dem ersten Auslassmodul (60) verbunden ist;
wobei der Mischwasserauslass des Temperatursteuermoduls, der Mischwassereinlass des Schaltmoduls, das erste Wasserableitungsloch des Schaltmoduls und das erste Auslassmodul jeweils mit einem Verbindungsanschlussstück (91) versehen sind,
wobei das Verbindungsanschlussstück und die flexible Leitung dadurch verbunden sind: die äußere Rotationsfläche des Verbindungsanschlussstücks ist mit einer ringförmigen Nut (92) ausgehöhlt, das Ende der flexiblen Leitung ist auf das Verbindungsanschlusssttick geschoben, eine Klemmfeder (93) ist aufgebaut, wobei die Klemmfeder in der Position, die der ringförmigen Nut entspricht, auf der flexiblen Leitung arretiert ist.

## Revendications

1. Robinet de douche avec une régulation de température modulaire et une commande de manoeuvre, comprenant un boîtier (10), un module de régulation de température (20), une partie d'actionnement de régulation de température (30), un module de manoeuvre (40), une partie d'actionnement de manoeuvre (50), un premier module de sortie (60) et un second module de sortie (70), le module de régulation de température (20) étant pourvu d'une arrivée d'eau froide (21) et d'une arrivée d'eau chaude (21), l'arrivée d'eau froide (21) et l'arrivée d'eau chaude (21) du module de régulation de température (20) traversant le boîtier (10) et sortant de celui-ci ; un premier orifice de dérivation d'eau du module de manoeuvre (40) étant relié au premier module de sortie (60) par un tuyau souple ou un tuyau rétractable, un second orifice de dérivation d'eau du module de manoeuvre (40) étant relié au second module de sortie (70) ; la partie d'actionnement de régulation de température (30) et la partie d'actionnement de manoeuvre (50) étant reliées respectivement au module de commande de température (20) et au module de manoeuvre (40) ;
**caractérisé en ce que** le robinet comprend également une plaque de fixation, le module de régulation de température (20) et le module de manoeuvre (40) étant assemblés de manière fixe sur ladite plaque de fixation (80) ; la plaque de fixation (80) étant assemblée de manière fixe dans le boîtier ; moyennant quoi le premier module de sortie (60) et le second module de sortie (70) sont assemblés de manière fixe sur la plaque de fixation (80) ou dans le boîtier (10) et traversent ledit boîtier (10) et sortent de celui-ci ; et une sortie d'eau mélangée (23) du module de régulation de température (20) étant reliée à une arrivée d'eau mélangée du module de manoeuvre (40) par un tuyau flexible ou un tuyau rétractable.

2. Robinet de douche avec une régulation de température modulaire et une commande de manoeuvre selon la revendication 1, dans lequel le premier module de sortie (60) est assemblé de manière fixe sur la plaque de fixation (80) .

3. Robinet de douche avec une régulation de température modulaire et une commande de manoeuvre selon la revendication 1 et/ou 2, dans lequel le module de régulation de température (20) et le module de manoeuvre (40) sont assemblés dans le boîtier (10) ; le premier module de sortie (60) comprend un raccord en L (61) et un premier raccord de sortie (62), une extrémité du raccord en L traverse la plaque de fixation (80) de bas en haut, le premier raccord de sortie est disposé sur la plaque de fixation, le premier raccord de sortie est assemblé de manière fixe et relié à l'extrémité du raccord en L, et ledit raccord en L et le premier raccord de sortie sont assemblés de manière fixe sur la plaque de fixation.

4. Robinet de douche avec une régulation de température modulaire et une commande de manoeuvre selon l'une au moins des revendications 1 à 3, dans lequel le module de régulation de température (20) et le module de manoeuvre (40) sont disposés sous la plaque de fixation (80).

5. Robinet de douche avec une régulation de température modulaire et une commande de manoeuvre selon l'une au moins des revendications 1 à 4, dans lequel le boîtier (10) comprend une coque inférieure et une plaque de recouvrement (11) ; la coque inférieure est pourvue d'une paroi inférieure, la paroi inférieure (12) est pourvue d'un bord prolongé qui comprend un bord avant et des bords gauche et droit qui sont reliés respectivement aux extrémités gauche et droite du bord avant, le bord prolongé s'étend vers le haut pour former une paroi latérale ; la plaque de recouvrement est fixée à la paroi latérale (13), une chambre d'assemblage est formée entre la plaque de recouvrement et la coque inférieure, la plaque de fixation (80) est fixée à la coque inférieure, la plaque de recouvrement est disposée sur la plaque de fixation ; le module de régulation de température, le module de manoeuvre et la plaque de fixation sont disposés dans la chambre d'assemblage.

6. Robinet de douche avec une régulation de température modulaire et une commande de manoeuvre selon la revendication 5, dans lequel les parties de la paroi latérale (13) correspondant aux bords gauche et droit sont pourvues respectivement d'un orifice (14) qui traverse la paroi latérale, la partie d'actionnement de régulation de température (30) et la partie d'actionnement de manoeuvre (50) traversent respectivement les deux orifices (14) afin d'être reliées au module de régulation de température (20) et au module de manoeuvre (40).

7. Robinet de douche avec une régulation de température modulaire et une commande de manoeuvre selon la revendication 5 et/ou 6, dans lequel la paroi inférieure (12) est pourvue d'une saillie (15), la plaque de fixation (80) est mise en contact avec la face d'extrémité de la saillie et est assemblée de manière fixe par des vis.

8. Robinet de douche avec une régulation de température modulaire et une commande de manoeuvre selon l'une au moins des revendications 5 à 7, dans lequel la plaque de recouvrement (11) est une plaque en verre, la plaque de fixation (80) est une plaque en acier inoxydable.

9. Robinet de douche avec une régulation de température modulaire et une commande de manoeuvre selon l'une au moins des revendications 5 à 8, dans lequel la plaque de recouvrement (11) est pourvue d'un orifice traversant, le premier raccord de sortie (62) traverse ledit orifice traversant ; le second module de sortie (70) s'étend vers le bas et sort de la coque inférieure.

10. Robinet de douche avec une régulation de température modulaire et une commande de manoeuvre selon l'une au moins des revendications 1 à 9, dans lequel la sortie d'eau mélangée (23) du module de régulation de température (20) et l'arrivée d'eau mélangée du module de manoeuvre (40) sont reliées par un tuyau flexible, le premier orifice de dérivation d'eau du module de manoeuvre est relié au premier module de sortie (60) par un tuyau flexible ; la sortie d'eau mélangée du module de régulation de température, l'arrivée d'eau mélangée du module de manoeuvre, le premier orifice, de dérivation d'eau du module de manoeuvre et le premier module de sortie sont pourvus respectivement d'un raccord de liaison (91), le raccord de liaison et le tuyau flexible étant reliés ainsi : la surface de révolution externe du raccord de liaison est creusée par une rainure annulaire (92), l'extrémité du tuyau flexible est enfilée sur le raccord de liaison, un ressort de serrage (93) est prévu, le ressort de serrage est bloqué sur le tuyau flexible à l'endroit correspondant à la rainure annulaire.
